# FASCICULE DE BREVET EUROPEEN

(11) **EP 3 980 634 B1**
(45) Date de publication et mention de la délivrance du brevet: **24.07.2024**
(21) Numéro de dépôt: 20726822.8
(22) Date de dépôt: 19.05.2020
(51) Int. Cl.: F02D 41/00, F02D 41/04, F02D 41/12, F02D 41/14

(54) **PROCÉDÉ DE COMMANDE D'UN MOTEUR À INJECTION INDIRECTE**
VERFAHREN ZUR STEUERUNG EINES MOTORS MIT INDIREKTER EINSPRITZUNG
METHOD FOR CONTROLLING AN INDIRECT INJECTION ENGINE

(30) Priorité: 05.06.2019 FR 1905937
(43) Date de publication de la demande: 13.04.2022
(73) Titulaire: NEW H POWERTRAIN HOLDING, S.L.U., 47008 Valladolid (ES)
(72) Inventeur: ABIDA, Jamil, 91850 BOURAY SUR JUINE (FR); PEREIRA, Luc, 18320 Cours Des Barres (FR)
(74) Mandataire: Renault Group
(86) Numéro de dépôt international: PCT/EP2020/063922
(87) Numéro de publication internationale: WO 2020/244921

(56) Documents cités:
- DE-A1- 10 336 102
- DE-A1- 102010 042 770
- FR-A1- 3 064 683
- FR-A3- 2 993 318
- US-A- 4 949 693

## Description

### DOMAINE TECHNIQUE DE L'INVENTION

La présente invention concerne de manière générale les véhicules automobiles équipés d'un moteur à combustion interne.

Elle concerne plus particulièrement un moteur à allumage commandé et à injection indirecte pour véhicule automobile, comprenant :
- une chambre de combustion,
- une ligne d'admission d'air qui débouche dans la chambre de combustion et qui est équipée d'une vanne d'admission adaptée à réguler le débit d'air circulant dans ladite ligne et d'au moins un injecteur de carburant,
- une ligne d'échappement des gaz brûlés hors de la chambre de combustion,
- une pédale d'accélérateur, et
- un calculateur adapté à déterminer la position ou la force exercée sur la pédale d'accélérateur et à commander la vanne d'admission et chaque injecteur de carburant.

Elle concerne également un procédé de commande d'un tel moteur.

### ETAT DE LA TECHNIQUE

Dans un moteur à allumage commandé et à injection indirecte, les injecteurs de carburant introduisent le carburant non pas directement dans les cylindres du moteur, mais en amont des soupapes d'admission du moteur.

Lors de l'injection du carburant, une majeure partie du carburant s'évapore instantanément et est aspirée dans les cylindres. Une partie résiduelle du carburant se dépose quant à elle sur les parois des conduits, au voisinage des soupapes d'admission, ce qui forme un film de liquide qui s'évapore plus lentement.

Ce phénomène est connu sous le nom de « mouillage des parois ».

Lors d'un relâchement de l'accélérateur sans freinage, le conducteur s'attend à un léger ralentissement du véhicule.

En pratique, ce relâchement se traduit par une fermeture progressive de la vanne d'admission d'air frais et par une régulation du débit de carburant injecté de façon que la richesse du mélange reste égale à 1.

Comme cela apparaît par exemple dans le document FR3064683, l'arrêt d'injection de carburant intervient en général avant la fermeture complète ou quasi-complète de la vanne d'admission du débit d'air frais. A cet instant, la richesse du mélange est alors censée tomber à 0.

La demanderesse a constaté qu'à cause du phénomène de mouillage des parois, contrairement à ce qui est attendu, la richesse présente en pratique un pic au moment de l'arrêt de l'injection de carburant.

Elle s'est alors aperçue que le film de carburant mouillant les parois continue à s'évaporer lentement et à alimenter les cylindres en carburant alors que le débit d'air frais se réduit, si bien que le mélange devient « riche » en carburant.

Ce phénomène présente plusieurs inconvénients.

Le premier inconvénient est que la richesse du mélange provoque une dégradation de la combustion, ce qui produit davantage de monoxyde de carbone et d'hydrocarbures imbrûlés. L'efficacité du traitement des gaz brûlés s'en trouve alors amoindrie, ce qui provoque un accroissement des émissions de polluants dans l'atmosphère.

Un autre inconvénient est que ce phénomène génère de façon passagère un couple moteur non nul qui s'avère perturbant pour le conducteur.

On connaît également du document DE102010042770 A1 ou du document DE10336102 A1 un moteur à injection indirecte qui est programmé de manière que, lorsque le conducteur relâche brutalement la pédale d'accélérateur, le boîtier-papillon commandant l'arrivée d'air frais dans le moteur réduise non pas brutalement mais progressivement la quantité d'air admise dans le moteur afin de maintenir une richesse égale à 1.

### PRESENTATION DE L'INVENTION

Afin de remédier aux inconvénients précités de l'état de la technique, la présente invention propose un procédé de commande tel que défini dans la revendication 1.

Ainsi, grâce à l'invention, lorsque les injecteurs cessent d'injecter du carburant dans le moteur, la richesse du moteur continue à être régulée en utilisant non plus ces injecteurs (qui régulaient la richesse en fonction du débit d'air), mais la vanne d'admission d'air frais (qui régule la richesse en fonction du débit de carburant résiduel).

Ainsi le mélange présent dans la chambre de combustion présente-t-il une richesse adéquate pour restreindre au mieux les émissions de polluants du moteur. D'autres caractéristiques avantageuses et non limitatives du procédé de commande conforme à l'invention, prises individuellement ou selon toutes les combinaisons techniquement possibles, sont définies dans les revendications 2 à 6.

L'invention propose également un moteur tel que défini dans la revendication 7.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une représentation schématique d'un moteur à combustion interne conforme à l'invention ;
[Fig. 2] illustre la variation dans le temps du débit d'air insufflé dans la chambre de combustion du moteur de la figure 1 ;
[Fig. 3] illustre la variation dans le temps de la richesse du mélange injecté en amont de la chambre de combustion du moteur de la figure 1 ;
[Fig. 4] illustre la variation dans le temps de la richesse du mélange débouchant dans la chambre de combustion du moteur de la figure 1 ;
[Fig. 5] représente une loi de commande des injecteurs du moteur de la figure 1 au cours d'une première phase ;
[Fig. 6] représente une loi de commande de la vanne d'admission du moteur de la figure 1 au cours d'une seconde phase.

Dans la description, les termes « amont » et « aval » seront utilisés suivant le sens de l'écoulement des gaz, depuis le point de prélèvement de l'air frais dans l'atmosphère jusqu'à la sortie des gaz brûlés dans l'atmosphère.

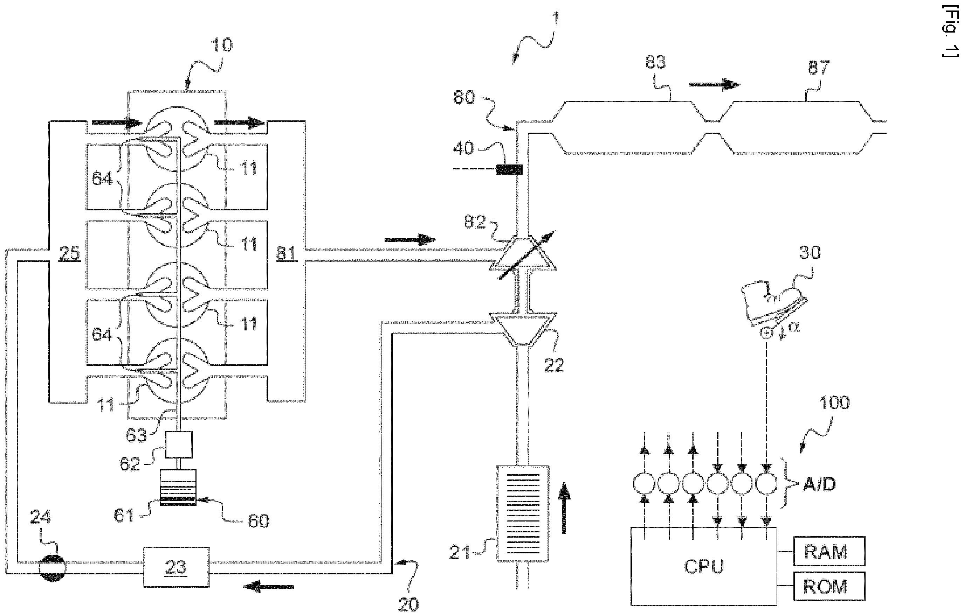

Sur la figure 1, on a représenté schématiquement un moteur à combustion interne 1 de véhicule automobile, qui comprend un bloc-moteur 10 pourvu d'un vilebrequin et de quatre pistons (non représentés) logés dans quatre cylindres 11.

Ces pistons et ces cylindres délimitent ensemble une chambre de combustion.

Ce moteur est ici à allumage commandé. Il comporte donc des bougies dans ses cylindres 11.

En amont des cylindres 11, le moteur à combustion interne 1 comporte une ligne d'admission 20 qui prélève l'air frais dans l'atmosphère et qui débouche dans un répartiteur d'air 25 agencé pour répartir l'air frais vers chacun des quatre cylindres 11 du bloc-moteur 10.

Cette ligne d'admission 20 comporte, dans le sens d'écoulement de l'air frais, un filtre à air 21 qui filtre l'air frais prélevé dans l'atmosphère, un compresseur 22 qui comprime l'air frais filtré par le filtre à air 21, un refroidisseur d'air principal 23 qui refroidit cet air frais comprimé, et une vanne d'admission 24 qui permet de réguler le débit d'air frais Qₐᵢᵣ débouchant dans le répartiteur d'air 25.

En sortie des cylindres 11, le moteur à combustion interne 1 comporte une ligne d'échappement 80 qui s'étend depuis un collecteur d'échappement 81 dans lequel débouchent les gaz qui ont été préalablement brûlés dans les cylindres 11, jusqu'à un silencieux d'échappement 87 permettant de détendre les gaz brûlés avant qu'ils ne soient évacués dans l'atmosphère. Elle comporte par ailleurs, dans le sens d'écoulement des gaz brûlés, une turbine 82 permettant d'entraîner le compresseur 22, et un pot catalytique 83 pour le traitement des gaz brûlés.

Ici, le moteur ne comporte pas davantage de ligne de circulation de gaz. En variante, il pourrait par exemple comporter en outre une ligne de recirculation des gaz brûlés depuis la ligne d'échappement vers la ligne d'admission, à haute ou à basse pression, plus connue sous le nom de ligne EGR (de l'acronyme anglais: Exhaust Gas Reycling).

Le moteur à combustion interne 1 comporte par ailleurs un circuit d'injection 60 de carburant, qui comporte une pompe d'injection 62 agencée pour prélever le carburant dans un réservoir 61 afin de l'amener sous pression dans un rail de distribution 63.

Le moteur est à injection indirecte.

Par conséquent, cette ligne d'injection 60 comporte des injecteurs 64 dont les entrées communiquent avec le rail de distribution 63, et dont les sorties débouchent en amont des cylindres 11, dans le répartiteur d'air 25 ou dans les conduits du bloc-moteur permettant de connecter le répartiteur d'air 25 aux quatre cylindres 11.

Pour piloter les différents organes du moteur à combustion interne 1 et notamment la vanne d'admission 24 et les injecteurs 64, il est prévu un calculateur 100 comportant un processeur (CPU), une mémoire vive (RAM), une mémoire morte (ROM), des convertisseurs analogiques-numériques (A/D), et différentes interfaces d'entrée et de sortie.

Grâce à ses interfaces d'entrée, le calculateur 100 est adapté à recevoir de différents capteurs des signaux d'entrée relatifs au fonctionnement du moteur.

Il est ainsi notamment adapté à recevoir un signal relatif à l'angle d'enfoncement α de la pédale d'accélérateur.

Il est également prévu pour recevoir un signal relatif à la richesse λ du mélange de carburant et d'air frais insufflé dans la chambre de combustion. Ce signal est ici envoyé par une sonde de dioxygène 40 placée dans la ligne d'échappement 80, en amont du pot catalytique 83.

Grâce à une cartographie prédéterminée sur banc d'essais et mémorisée dans sa mémoire morte, le calculateur 100 est adapté à générer, pour chaque condition de fonctionnement du moteur, des signaux de sortie.

Enfin, grâce à ses interfaces de sortie, le calculateur 100 est adapté à transmettre ces signaux de sortie aux différents organes du moteur, notamment à la vanne d'admission 24 et aux injecteur 64.

Lorsque le moteur est démarré, l'air frais prélevé dans l'atmosphère par la ligne d'admission 20 est filtré par le filtre à air 21, comprimé par le compresseur 22, refroidi par le refroidisseur d'air principal 23, puis brûlé dans les cylindres 11.

A leur sortie des cylindres 11, les gaz brûlés sont détendus dans la turbine 82, traités et filtrés dans le pot catalytique 83, puis détendus à nouveau dans le silencieux d'échappement 87 avant d'être rejetés dans l'atmosphère.

Le calculateur est alors programmé pour mettre en oeuvre un procédé de commande, de manière récursive, c'est-à-dire en boucle et à pas de temps réguliers.

Ce procédé de commande comporte quatre étapes principales.

La première étape a) consiste à déterminer la position angulaire α de la pédale d'accélérateur 30.

Cette étape est mise en oeuvre au moyen d'un capteur de position qui détermine cette position angulaire et la transmet au calculateur 100.

En variante, le calculateur pourrait acquérir plutôt la pression exercée par le conducteur sur cette pédale.

Quoi qu'il en soit, à l'issue de cette étape, le calculateur détermine si les dernières valeurs de position angulaire α relevées indiquent ou non un relâchement complet de la pédale d'accélérateur 30 par le conducteur.

Si tel n'est pas le cas, le processus s'interrompt puis redémarre à intervalle régulier.

Dans le cas contraire, si la pédale d'accélérateur a été relâchée, le procédé se poursuit en une seconde étape b) au cours de laquelle la vanne d'admission 24 est pilotée de façon à se fermer partiellement pour réduire le couple moteur entraînant le véhicule vers l'avant.

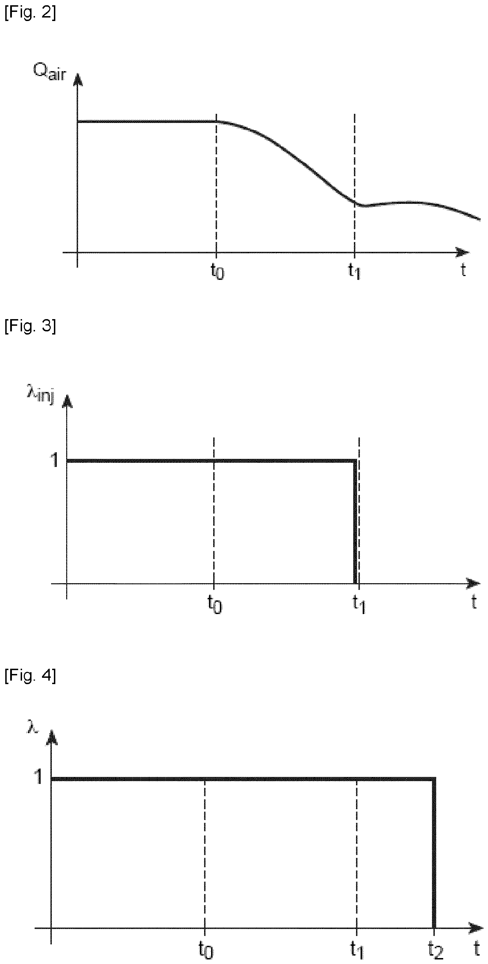

Sur les figures 2 à 4, cette étape b) commence à l'instant t₀. On observe sur les figures 2 et 4 qu'avant cet instant, le point de fonctionnement du moteur était stabilisé (le débit d'air Qₐᵢᵣ injecté était constant et la richesse λ du mélange était sensiblement égal à 1).

La vanne d'admission 24 est ainsi pilotée pour se fermer selon un profil de vitesse prédéterminé (par exemple à vitesse constante).

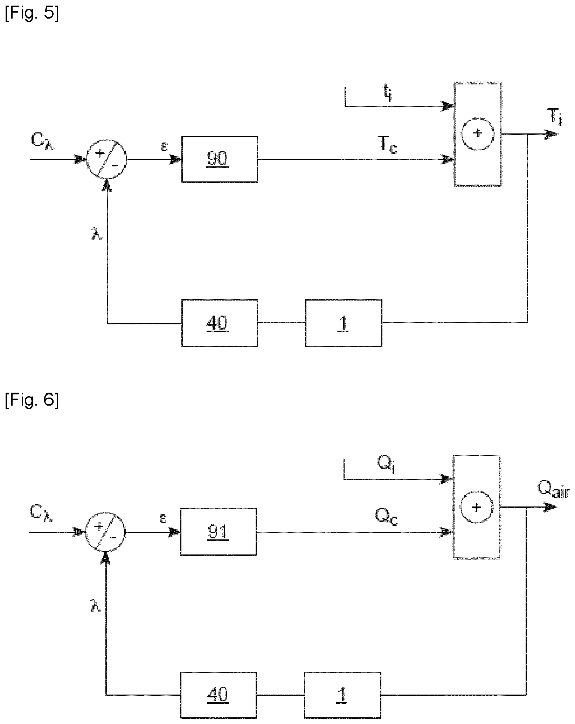

Comme le montre la figure 5, lors de cette étape, la consigne envoyée aux injecteurs 64 est élaborée de façon à maintenir une richesse λ égale à 1 (ou aussi proche que possible de 1).

Pour cela, le calculateur 100 utilise une boucle de rétroaction tenant compte des mesures effectuées par la sonde de dioxygène 40.

Cette boucle de rétroaction comporte en entrée une consigne de richesse C_{λ} ici égale à 1.

Elle offre en sortie une consigne de débit de carburant à injecter, se présentant ici sus la forme d'une consigne Tᵢ de durée d'ouverture des injecteurs 64 à chaque cycle.

La prise en compte de cette consigne dans le moteur 1 permet de réaliser une nouvelle mesure de la richesse λ au moyen de la sonde de dioxygène 40.

L'écart ε entre la richesse λ mesurée et la consigne de richesse C_{λ} permet, en utilisant un régulateur 90 (par exemple de type PID), de déterminer une valeur de correction Tc de la durée d'ouverture des injecteurs 64.

Ainsi, la consigne Tᵢ de durée d'ouverture transmise aux injecteurs 64 est égale à la somme de cette valeur de correction Tc et d'une valeur tᵢ prédéterminée (compte tenu du point de fonctionnement du moteur).

Cette boucle de rétroaction permet donc d'ajuster la quantité de carburant injecté en fonction de la position de la vanne d'admission 24.

A l'issue de cette étape b), les injecteurs 64 cessent d'injecter du carburant dans le moteur.

On observe sur la figure 2 qu'à cet instant t₁, le débit d'air Qₐᵢᵣ a diminué fortement mais n'est pas nul.

On observe sur la figure 3 que l'injection de carburant cessant, la richesse λᵢₙⱼ du mélange au niveau des injecteurs 64 chute brutalement à zéro.

On observe enfin sur la figure 4 que du fait du phénomène de mouillage des parois, la richesse λ du mélange insufflé dans les cylindres 11 ne chute quant à elle pas immédiatement.

De façon à éviter que la richesse λ ne varie, ce qui affecterait le fonctionnement du moteur (et notamment l'efficacité du traitement des gaz brûlés par le pot catalytique), le procédé se poursuit alors pour que cette fois, ce soit la position de la vanne d'admission 24 qui soit ajustée à la quantité de carburant rentrant dans les cylindres 11.

Pour cela, au cours d'une troisième étape c), le calculateur détermine un débit de carburant résiduel Q_{carb} provenant du film de carburant mouillant les parois et s'évaporant progressivement.

Il utilise pour cela un modèle de mouillage des parois prédéterminé et enregistré dans sa mémoire morte. Un tel modèle est par exemple décrit dans le document FR2760045.

Enfin, au cours d'une dernière étape d), le calculateur 100 commande la vanne d'admission 24 en fonction de ce débit de carburant résiduel Q_{carb} de façon que la richesse λ reste égale ou proche de 1.

Pour cela, la vanne d'admission 24 pourrait être commandée en boucle ouverte, au moyen d'un modèle prédéterminé. En effet, on obtient une richesse égale à 1 lorsque le débit d'air est égal à 14,7 fois celui de carburant. Ainsi pourraiton alors simplement commander la vanne d'admission 24 de façon qu'elle laisse passer un débit d'air Qₐᵢᵣ égal à 14,7 fois le débit de carburant résiduel Q_{carb}.

Toutefois, de façon préférentielle, le calculateur 100 utilise une loi de commande en boucle fermée pour piloter la vanne d'admission 24.

La boucle de rétroaction utilisée est représentée sur la figure 6.

Cette boucle de rétroaction comporte en entrée une consigne de richesse C_{λ} ici égale à 1.

Elle offre en sortie une consigne de débit d'air Qₐᵢᵣ à insuffler dans les cylindres 11 à chaque cycle.

La prise en compte de cette consigne dans le moteur 1 permet de réaliser une nouvelle mesure de la richesse λ au moyen de la sonde de dioxygène 40.

L'écart ε entre la richesse λ mesurée et la consigne de richesse C_{λ} permet, en utilisant un régulateur 91 (par exemple de type PID), de déterminer une valeur de correction Qc de débit d'air à insuffler.

Ainsi, la consigne Qₐᵢᵣ de débit d'air transmise à la vanne d'admission 24 est égale à la somme de cette valeur de correction Qc et d'une valeur de référence Qi prédéterminée compte tenu du point de fonctionnement du moteur.

Cette boucle de rétroaction permet donc d'ajuster la quantité d'air insufflé en fonction du débit de carburant résiduel Qcarb.

A l'issue de cette étape d), à l'instant t₂, l'ensemble du carburant résiduel s'est évaporé et la richesse dans les cylindres chute brutalement à zéro.

On comprend qu'au cours de l'étape d), entre les instants t₁ et t₂, le maintien de la richesse à 1 va provoquer le maintien d'un couple moteur non nul alors que le conducteur a entièrement relâché la pédale d'accélérateur et qu'il s'attend justement à ce que le moteur 1 produise un couple nul.

Pour éviter de surprendre ainsi le conducteur, il est possible de déterminer la valeur de ce couple moteur (en fonction par exemple du débit d'air insufflé et du rendement connu du moteur), et de piloter en conséquence un moyen de récupération du couple moteur, c'est-à-dire un moyen qui absorbe ce couple de sorte qu'il ne soit pas transmis aux roues du véhicule.

Ainsi peut-on à titre d'exemple prévoir de commander l'alternateur du moteur de façon qu'il récupère cet excédent de couple moteur.

En variante, on peut utiliser une machine électrique, couplée au vilebrequin du moteur ou aux roues du véhicule automobile, et qui est susceptible de fonctionner en mode moteur et en mode de génératrice. Cette machine électrique permettra alors de prélever l'excédent de couple moteur et de le transformer en énergie électrique de façon à pouvoir recharger une batterie d'accumulateurs du véhicule ou à pouvoir alimenter des appareils électriques du moteur.

Encore en variante, on peut utiliser les moyens de freinage des roues du véhicule automobile de façon à contrer le couple moteur par un couple de freinage.

La présente invention n'est nullement limitée au mode de réalisation décrit et représenté, mais l'homme du métier saura y apporter toute variante conforme à l'invention.

## Revendications

1. Procédé de commande d'un moteur (1) à allumage commandé et à injection indirecte de véhicule automobile, ledit moteur (1) comprenant
- une chambre de combustion,
- une ligne d'admission d'air (20) qui débouche dans la chambre de combustion et qui est équipée d'une vanne d'admission (24) adaptée à réguler le débit d'air circulant dans ladite ligne et d'au moins un injecteur de carburant (64),
- une ligne d'échappement (80) des gaz brûlés hors de la chambre de combustion,
- une pédale d'accélérateur (30), et
- un calculateur (100) adapté à déterminer la position (a) ou la force exercée sur la pédale d'accélérateur (30) et à commander la vanne d'admission (24) et chaque injecteur de carburant (64),
**caractérisé en ce que** le procédé de commande comporte :
a) une étape de détermination de la position (a) ou de la force exercée sur la pédale d'accélérateur (30), puis, si la position (a) ou la force exercée déterminée indique un relâchement complet de la pédale d'accélérateur (30),
b) une étape de fermeture partielle de la vanne d'admission (24) au cours de laquelle les injecteurs sont commandés de façon que la richesse (λ) du mélange d'air et de carburant débouchant dans la chambre de combustion reste proche de 1, puis, lorsque les injecteurs (64) cessent d'injecter du carburant,
c) une étape de détermination d'un débit de carburant résiduel (Q_{carb}) débouchant dans la chambre de combustion, et, tant que le débit de carburant résiduel (Qcarb) est non nul,
d) une étape de commande de la vanne d'admission (24) en fonction du débit de carburant résiduel (Q_{carb}) de façon que ladite richesse (λ) reste proche de 1.

2. Procédé de commande selon la revendication 1, dans lequel, la ligne d'échappement (80) comprenant une sonde de richesse (40), à l'étape d), la commande de la position de la vanne d'admission (24) est réalisée au moyen d'une boucle de rétroaction, compte tenu des mesures effectuées par la sonde de richesse (40).

3. Procédé de commande selon la revendication 1, dans lequel à l'étape d), la commande de la position de la vanne d'admission (24) est réalisée en boucle ouverte, au moyen d'un modèle prédéterminé.

4. Procédé de commande selon l'une des revendications précédentes, dans lequel à l'étape d), il est prévu de déterminer une valeur de couple moteur, et de piloter un moyen de récupération du couple moteur en fonction de la valeur déterminée.

5. Procédé de commande selon la revendication précédente, dans lequel le couple moteur est récupéré au moyen d'un alternateur et/ou d'une machine électrique et/ou de moyens de freinage des roues du véhicule automobile.

6. Procédé de commande selon l'une des revendications précédentes, dans lequel, la ligne d'échappement (80) comprenant une sonde de richesse (40), à l'étape b), la commande des injecteurs (64) est réalisée au moyen d'une boucle de rétroaction, compte tenu des mesures effectuées par la sonde de richesse (40).

7. Moteur à allumage commandé et à injection indirecte, comprenant :
- une chambre de combustion,
- une ligne d'admission d'air (20) qui débouche dans la chambre de combustion et qui est équipée d'une vanne d'admission (24) adaptée à réguler le débit d'air circulant dans ladite ligne et d'au moins un injecteur de carburant (64),
- une ligne d'échappement (80) des gaz brûlés hors de la chambre de combustion,
- une pédale d'accélérateur (30), et
- un calculateur (100) adapté à déterminer la position (a) ou la force exercée sur la pédale d'accélérateur (30) et à commander la vanne d'admission (24) et chaque injecteur de carburant (64),
**caractérisé en ce que** le calculateur est programmé pour mettre en oeuvre un procédé de commande selon l'une des revendications précédentes.

## Patentansprüche

1. Verfahren zur Steuerung eines Motors (1) mit Fremdzündung und indirekter Einspritzung eines Kraftfahrzeugs, wobei der Motor (1) umfasst:
- eine Brennkammer,
- eine Luftansaugleitung (20), die in die Brennkammer mündet und mit einem Einlassventil (24), das dazu geeignet ist, den Luftstrom durch die Leitung zu regulieren, und mit mindestens einer Kraftstoffeinspritzdüse (64) ausgestattet ist,
- eine Abgasleitung (80) für die verbrannten Gase aus der Brennkammer,
- ein Gaspedal (30) und
- einen Rechner (100), der dazu geeignet ist, die Position (α) oder die Kraft, die auf das Gaspedal (30) ausgeübt wird, zu bestimmen und das Einlassventil (24) und jede Kraftstoffeinspritzdüse (64) zu steuern,
**dadurch gekennzeichnet, dass** das Steuerungsverfahren umfasst:
a) einen Schritt zum Bestimmen der Position (α) oder der auf das Gaspedal (30) ausgeübten Kraft, und dann, wenn die bestimmte Position (α) oder die ausgeübte Kraft ein vollständiges Loslassen des Gaspedals (30) anzeigt,
b) einen Schritt des teilweisen Schließens des Einlassventils (24), während dessen die Einspritzdüsen so gesteuert werden, dass die Anreicherung (λ) des in die Verbrennungskammer mündenden Luft-Kraftstoff-Gemischs nahe bei 1 bleibt, und dann, wenn die Einspritzdüsen (64) aufhören, Kraftstoff einzuspritzen,
c) einen Schritt zum Bestimmen einer Restkraftstoffmenge (Q_{carb}), die in die Brennkammer mündet, und, solange die Restkraftstoffmenge (Qcarb) ungleich Null ist,
d) einen Schritt des Steuerns des Einlassventils (24) in Abhängigkeit von der Restkraftstoffmenge (Q_{carb}), so dass die genannte Anreicherung (λ) nahe bei 1 bleibt.

2. Steuerungsverfahren nach Anspruch 1, wobei die Abgasleitung (80) eine Anreicherungssonde (40) umfasst, in Schritt d) die Steuerung der Position des Einlassventils (24) mittels einer Rückkopplungsschleife unter Berücksichtigung der von der Anreicherungssonde (40) durchgeführten Messungen durchgeführt wird.

3. Steuerungsverfahren nach Anspruch 1, wobei in Schritt d) die Steuerung der Position des Einlassventils (24) in einem offenen Regelkreis unter Verwendung eines vorbestimmten Modells erfolgt.

4. Steuerungsverfahren nach einem der vorhergehenden Ansprüche, wobei in Schritt d) vorgesehen ist, einen Wert für das Motordrehmoment zu bestimmen und ein Mittel zur Rückgewinnung des Motordrehmoments in Abhängigkeit von dem bestimmten Wert anzusteuern.

5. Steuerungsverfahren nach dem vorhergehenden Anspruch, bei dem das Antriebsmoment mittels eines Wechselstromgenerators und/oder einer elektrischen Maschine und/oder Mitteln zum Abbremsen der Räder des Kraftfahrzeugs wiedergewonnen wird.

6. Steuerungsverfahren nach einem der vorhergehenden Ansprüche, wobei die Abgasleitung (80) eine Anreicherungssonde (40) umfasst, im Schritt b) die Steuerung der Einspritzdüsen (64) mittels einer Rückkopplungsschleife unter Berücksichtigung der von der Anreicherungssonde (40) durchgeführten Messungen erfolgt.

7. Fremdgezündeter Motor mit indirekter Einspritzung, umfassend :
- eine Brennkammer,
- eine Luftansaugleitung (20), die in die Brennkammer mündet und mit einem Einlassventil (24), das dazu geeignet ist, den Luftstrom durch die Leitung zu regulieren, und mit mindestens einer Kraftstoffeinspritzdüse (64) ausgestattet ist,
- eine Abgasleitung (80) für die verbrannten Gase aus der Brennkammer,
- ein Gaspedal (30) und
- einen Rechner (100), der dazu geeignet ist, die Position (α) oder die Kraft, die auf das Gaspedal (30) ausgeübt wird, zu bestimmen und das Einlassventil (24) und jede Kraftstoffeinspritzdüse (64) zu steuern,
**dadurch gekennzeichnet, dass** der Rechner so programmiert ist, dass er ein Steuerungsverfahren nach einem der vorhergehenden Ansprüche durchführt.

## Claims

1. A method for controlling a spark-ignition, indirect-injection motor vehicle engine (1), said engine (1) comprising:
- a combustion chamber,
- an air intake line (20) that opens into the combustion chamber and is equipped with an intake valve (24) adapted to regulate the flow of air circulating in said line and at least one fuel injector (64),
- an exhaust line (80) for burnt gases from the combustion chamber,
- an accelerator pedal (30), and
- a computer (100) adapted to determine the position (α) or force exerted on the accelerator pedal (30) and to control the intake valve (24) and each fuel injector (64),
**characterized in that** the control method comprises:
a) a step of determining the position (α) or the force exerted on the accelerator pedal (30), then, if the determined position (α) or force exerted indicates a complete release of the accelerator pedal (30),
b) a step of partially closing the intake valve (24), during which the injectors are controlled so that the richness (λ) of the mixture of air and fuel entering the combustion chamber remains close to 1, and then, when the injectors (64) stop injecting fuel,
c) a step for determining a residual fuel flow (Q_{carb}) entering the combustion chamber, and, as long as the residual fuel flow (Qcarb) is non-zero,
d) a step of controlling the intake valve (24) based on the residual fuel flow (Q_{carb}) so that said richness (λ) remains close to 1.

2. The control method according to claim 1, wherein, since the exhaust line (80) comprises a richness probe (40), in step d) the position of the intake valve (24) is controlled by means of a feedback loop, taking into account the measurements done by the richness probe (40).

3. The control method according to claim 1, wherein in step d), control of the position of the intake valve (24) is performed in open-loop mode, using a predetermined model.

4. The control method according to one of the preceding claims, wherein in step d) an engine torque value is determined, and an engine torque recovery means is controlled based on the determined value.

5. The control method according to the preceding claim, wherein the engine torque is recovered by means of an alternator and/or an electric machine and/or means for braking the wheels of the motor vehicle.

6. The control method according to one of the preceding claims, wherein, since the exhaust line (80) comprises a richness probe (40), in step b) the injectors (64) are controlled by means of a feedback loop, taking into account the measurements done by the richness probe (40).

7. A spark-ignition, indirect injection engine, comprising:
- a combustion chamber,
- an air intake line (20) that opens into the combustion chamber and is equipped with an intake valve (24) adapted to regulate the flow of air circulating in said line and at least one fuel injector (64),
- an exhaust line (80) for burnt gases from the combustion chamber,
- an accelerator pedal (30), and
- a computer (100) adapted to determine the position (α) or force exerted on the accelerator pedal (30) and to control the intake valve (24) and each fuel injector (64),
**characterized in that** the computer is programmed to implement a control method according to one of the preceding claims.
